(19)

Europäisches
Patentamt
European
Patent Office
Office européen
des brevets

(11) **EP 2 423 261 A1**

(12) **EUROPEAN PATENT APPLICATION**
published in accordance with Art. 153(4) EPC

(43) Date of publication:
**29.02.2012 Bulletin 2012/09**

(21) Application number: **10766940.0**

(22) Date of filing: **30.03.2010**

(51) Int Cl.:
**C08L 67/04** (2006.01)   **C08J 3/20** (2006.01)
**C08L 101/16** (2006.01)

(86) International application number:
**PCT/JP2010/055751**

(87) International publication number:
**WO 2010/122881 (28.10.2010 Gazette 2010/43)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **20.04.2009 JP 2009102151**

(71) Applicant: **Kureha Corporation
Chuo-ku
Tokyo 103-8552 (JP)**

(72) Inventors:
• **SATO Hiroyuki
Chuo-ku
Tokyo 1038552 (JP)**

• **AKUTSU Fumio
Chuo-ku
Tokyo 1038552 (JP)**
• **KOBAYASHI Fuminori
Chuo-ku
Tokyo 1038552 (JP)**
• **WATANABE Akiko
Chuo-ku
Tokyo 1038552 (JP)**

(74) Representative: **HOFFMANN EITLE
Patent- und Rechtsanwälte
Arabellastraße 4
81925 München (DE)**

(54) **METHOD FOR PRODUCING SOLID POLYGLYCOLIC ACID RESIN COMPOSITION**

(57)   A method for producing a solid polyglycolic acid-based resin composition, comprising:
a cooling step of cooling a polyglycolic acid-based resin composition in a molten state by an aqueous medium, wherein
in the cooling step, the polyglycolic acid-based resin composition in the molten state is cooled by being brought into contact with the aqueous medium so that a sodium ion concentration in an obtained solid polyglycolic acid-based resin composition can be less than 100 ppb by mass.

EP 2 423 261 A1

## Description

[Technical Field]

The present invention relates to a method for producing a solid polyglycolic acid-based resin composition, and more specifically to a method for producing a solid polyglycolic acid-based resin composition having excellent heat stability.

[Background Art]

Polyglycolic acid-based resins are excellent in microbial degradability and hydrolyzability, and hence attract attention as a biodegradable polymer material having a reduced load on the environment. Polyglycolic acid-based resins are used for various forming processes such as extrusion molding and injection molding, after the polyglycolic acid-based resin compositions are formed in a particulate form such as a pellet form through steps of addition of a thermal stabilizer, melt kneading, solidification by cooling, and conversion into a particulate form.

Here, since polyglycolic acid-based resins have high hydrolyzability, cooling by the air has conventionally been employed for producing solid polyglycolic acid-based resin compositions. However, the cooling by the air has a problem that a solidified strand is more likely to have distortions. In this respect, International Publication No. WO2007/034805 (Patent Document 1) proposes a method for producing a polyglycolic acid-based resin composition, comprising cooling a polyglycolic acid-based resin composition in a molten state having a reduced glycolide content by an aqueous cooling medium such as water, and discloses that the production method makes it possible to suppress hydrolysis of the polyglycolic acid-based resin even when the polyglycolic acid-based resin composition in a molten state is cooled by water.

However, when a solid polyglycolic acid-based resin composition obtained by cooling with an aqueous cooling medium such as water is used for a forming process comprising heating such as extrusion molding or injection molding, the obtained formed article may be colored.

[Citation List]

[Patent Literature]

[PTL 1] International Publication No. WO2007/034805

[Summary of Invention]

[Technical Problem]

The present invention has been made in view of the problems of the conventional technologies, and an object of the present invention is to provide a method for producing a solid polyglycolic acid-based resin composition which is less likely to be colored due to heat, and which has excellent heat stability.

[Solution to Problem]

The present inventors have conducted earnest study to achieve the above-described object. As a result, the present inventors have found that cause of the occurrence of coloration due to heat is sodium ion contained in a solid polyglycolic acid-based resin composition in a case where the solid polyglycolic acid-based resin composition obtained by cooling with water is used for a forming process comprising heating. Moreover, the present inventors have found that the coloration due to heat occurs when sodium ion contained in the cooling water is absorbed by the polyglycolic acid-based resin composition in a cooling step so that the amount of sodium ion in the obtained solid polyglycolic acid-based resin composition reaches a predetermined amount or more. These findings have led to the completion of the present invention.

Specifically, a method for producing a solid polyglycolic acid-based resin composition of the present invention comprises:

a cooling step of cooling a polyglycolic acid-based resin composition in a molten state by an aqueous medium, wherein

in the cooling step, the polyglycolic acid-based resin composition in the molten state is cooled by being brought into contact with the aqueous medium so that a sodium ion concentration in an obtained solid polyglycolic acid-based resin composition can be less than 100 ppb by mass.

A difference (Cs-Cm) between the sodium ion concentration (Cs) in the solid polyglycolic acid-based resin composition obtained in the cooling step and a sodium ion concentration (Cm) in the polyglycolic acid-based resin compositions in a molten state is preferably 30 ppb by mass or less.

The aqueous medium used in the present invention is preferably ion-exchanged water, more preferably ion-exchanged water having a sodium ion concentration of less than 30 ppm by mass, and particularly preferably ion-exchanged water obtained by treatment with a hydrogen ion-exchange resin.

Moreover, in the cooling step according to the present invention, it is preferable that the polyglycolic acid-based resin composition in the molten state be cooled by being brought into contact with the ion-exchanged water so that a water content in the obtained solid polyglycolic acid-based resin composition can be less than 500 ppm by mass, and it is more preferable that the polyglycolic acid-based resin composition in the molten state be cooled by being brought into contact with a mist of the ion-exchanged water.

In the present invention, the thus obtained solid polyglycolic acid-based resin composition may be converted into a particulate form.

Note that, although it is not exactly clear why the solid polyglycolic acid-based resin composition obtained by the production method of the present invention is less likely to be colored due to heat, the present inventors speculate as follows. Specifically, in the method for producing a solid polyglycolic acid-based resin composition of the present invention, an aqueous medium having a low sodium ion concentration is brought into contact as a cooling medium, or an aqueous medium is brought into contact in such a manner that the amount of the aqueous medium absorbed by the polyglycolic acid-based resin composition during the cooling can be small. Hence, an amount of sodium ion absorbed by the polyglycolic acid-based resin composition upon contact with the aqueous medium is small, or, even when absorbed, the sodium ion is not concentrated on the surface of the polyglycolic acid-based resin composition. It is presumed that, as a result of this, the obtained solid polyglycolic acid-based resin composition is not colored even when heated.

On the other hand, it is presumed that, when the polyglycolic acid-based resin composition in a molten state is cooled by being immersed in ion-exchanged water having a relatively high sodium ion concentration, sodium ion is concentrated on the surface of the polyglycolic acid-based resin composition, and hence the obtained solid polyglycolic acid-based resin composition is colored due to heat.

[Advantageous Effects of Invention]

The present invention makes it possible to reduce the sodium ion concentration in the obtained solid polyglycolic acid-based resin composition without conducting a treatment for removing sodium ion after the cooling step, and hence to produce a solid polyglycolic acid-based resin composition which is less likely to be colored due to heat, and which has excellent heat stability.

[Description of Embodiments]

Hereinafter, the present invention will be described in detail on the basis of preferred embodiments thereof.

First, a polyglycolic acid-based resin composition in a molten state used in the present invention is described. The polyglycolic acid-based resin composition (hereinafter referred to as a "PGA-based resin composition") in a molten state used in the present invention comprises at least a polyglycolic acid-based resin (hereinafter referred to as a "PGA-based resin"). The PGA-based resin composition in a molten state preferably comprises a thermal stabilizer and/or a carboxyl group-capping agent, because the heat stability and water resistance of an obtained formed article (hereinafter referred to as a "PGA-based resin formed article") are improved. In the present invention, it is also possible to use PGA-based resin compositions in a molten state comprising various additives such as plasticizers, heat ray absorbers, ultraviolet absorbers, and pigments, and various fillers such as glass fibers, carbon fibers, metal fibers, natural fibers, synthetic fibers, and inorganic particles.

(PGA-based Resin)

Examples of the PGA-based resin used in the present invention include glycolic acid homopolymers (hereinafter referred to as "PGA homopolymers," the glycolic acid homopolymers including ring-opening polymers of glycolide, which is a cyclic ester derived from two molecules of glycolic acid) constituted of only the glycolic acid repeating unit represented by the following formula (1):

$$-[O-CH_2-C(=O)]- \qquad (1);$$

polyglycolic acid copolymers (hereinafter referred to as "PGA copolymers") having the glycolic acid repeating unit; and the like. These PGA-based resins may be used alone or in combination of two or more of kinds.

Examples of comonomers used with a glycolic acid monomer in the production of the PGA copolymer include cyclic monomers such as ethylene oxalate (i.e., 1,4-dioxane-2,3-dione), lactides, lactones (for example, β-propiolactone, β-butyrolactone, β-pivalolactone, γ-butyrolactone, δ-valerolactone, β-methyl-δ-valerolactone, ε-caprolactone, and the like), carbonates (for example, trimethylene carbonate and the like), ethers (for example, 1,3-dioxane and the like), ether esters (for example, dioxanone and the like), and amides (ε-caprolactam and the like); hydroxycarboxylic acids such as lactic acid, 3-hydroxypropanoic acid, 3-hydroxybutanoic acid, 4-hydroxybutanoic acid, and 6-hydroxycaproic acid, as well as alkyl esters thereof; substantially equimolar mixtures of an aliphatic diol such as ethylene glycol or 1,4-butanediol with an aliphatic dicarboxylic acid such as succinic acid or adipic acid, or an alkyl ester thereof. These copolymers may be used alone or in combination of two or more of kinds. Of these copolymers, hydroxycarboxylic acids are preferable from the viewpoint of heat resistance.

The content of the glycolic acid repeating unit represented by the formula (1) in the PGA-based resin used in the present invention is preferably 70% by mass or more, more preferably 80% by mass or more, further preferably 90% by mass or more, and particularly preferably 100% by mass. If the content of the glycolic acid repeating unit is less than the lower limit, the heat resistance and the gas-barrier property tend to be low.

In the present invention, the PGA-based resin to be used preferably contains no sodium ion, from the viewpoint of preventing the obtained solid PGA-based resin composition from being colored due to heat. However, the PGA-based resin may contain a trace amount of sodium ion, as long as no coloration due to heat occurs. Examples of such sodium ion include those due to contamination during the production of the PGA-based resin, or the like. In addition, from the viewpoint of preventing coloration due to heat as described above, a PGA-based resin having a sodium ion concentration of 0 ppb by mass or more and less than 100 ppb by mass is preferably used in the present invention.

In addition, the PGA-based resin has a weight average molecular weight of preferably $3 \times 10^4$ to $80 \times 10^4$, and more preferably $5 \times 10^4$ to $50 \times 10^4$. If the weight average molecular weight of the PGA-based resin is less than the lower limit, the mechanical strength of the PGA-based resin formed article tends to be low. Meanwhile, if the weight average molecular weight exceeds the upper limit, melt extrusion and forming processes tends to be difficult. Note that the weight average molecular weight is a value determined by gel permeation chromatography (GPC) relative to polymethyl methacrylate.

(Thermal Stabilizer)

A thermal stabilizer used in the present invention is preferably at least one phosphorus compound selected from the group consisting of phosphoric acid esters having a pentaerythritol skeletal structure (or a cyclic neopentanetetrayl structure) and alkyl phosphate (phosphite) esters having at least one hydroxyl group and at least one alkyl ester group. Specifically, phosphorus compounds described in International Publication No. WO2004/087813 are preferable. The amount of the thermal stabilizer added is preferably 0.003 to 3 parts by mass, and more preferably 0.005 to 1 parts by mass, relative to 100 parts by mass of the PGA-based resin. If the amount of the thermal stabilizer added is less than the lower limit, the obtained solid PGA-based resin composition tends to be colored due to heat. Meanwhile, if the amount of the thermal stabilizer added exceeds the upper limit, the effect of the addition tends to be saturated, and the thermal stabilizer may be eluted into the aqueous medium during the cooling, leading to contamination of the cooling medium.

In the present invention, the thermal stabilizer to be used preferably contains no sodium ion, from the viewpoint of preventing the obtained solid PGA-based resin composition from being colored due to heat. However, the thermal stabilizer may contain a trace amount of sodium ion, as long as no coloration due to heat occurs. Examples of such sodium ion include those due to contamination during the production of the thermal stabilizer, or the like. In addition, from the viewpoint of preventing coloration due to heat as described above, a thermal stabilizer having a sodium ion concentration of 0 ppb by mass or more and less than 100 ppb by mass is preferably used in the present invention.

(Carboxyl Group-Capping Agent)

As the carboxyl group-capping agent used in the present invention, those having a function of capping carboxyl groups and being known as water resistance improvers for aliphatic polyesters such as polylactic acid (for example, those described in Japanese Unexamined Patent Application Publication No. 2001-261797) can be used generally. Examples of the carboxyl group-capping agent include carbodiimide compounds including monocarbodiimides and polycarbodiimides such as N,N-2,6-diisopropylphenylcarbodiimide; oxazoline compounds such as 2,2'-m-phenylenebis (2-oxazoline), 2,2'-p-phenylenebis(2-oxazoline), 2-phenyl-2-oxazoline, and styrene-isopropenyl-2-oxazoline; oxazine compounds such as 2-methoxy-5,6-dihydro-4H-1,3-oxazine; epoxy compounds such as N-glycidylphthalimide, cyclohexene oxide, and triglycidyl isocyanurate; and the like. These carboxyl group-capping agents may be used alone or in combination of two or more of kinds of these carboxyl group-capping agents, carbodiimide compounds and epoxy compounds are preferable.

An amount of the carboxyl group-capping agent added is preferably 0.01 to 10 parts by mass, more preferably 0.1 to 2 parts by mass, and particularly preferably 0.3 to 1 parts by mass, relative to 100 parts by mass of the PGA-based resin. If the amount of the carboxyl group-capping agent added is less than the lower limit, the water resistance of the obtained solid PGA-based resin composition tends to be low. Meanwhile, if the amount of the carboxyl group-capping agent added exceeds the upper limit, the effect of the addition tends to be saturated, and the obtained solid PGA-based resin composition tends to be colored.

In the present invention, the carboxyl group-capping agent to be used also preferably contains no sodium ion, from the viewpoint of preventing the obtained solid PGA-based resin composition from being colored due to heat. However, the carboxyl group-capping agent to be used may contain a trace amount of sodium ion, as long as no coloration due to heat occurs. Examples of such sodium ion include those due to contamination during the production of the carboxyl group-capping agent, or the like. In addition, from the viewpoint of preventing coloration due to heat as described above, a carboxyl group-capping agent having a sodium ion concentration of 0 ppb by mass or more and less than 100 ppb by mass is preferably used in the present invention.

(Method for Producing PGA-based Resin Composition in Molten State)

A PGA-based resin composition in a molten state used in the present invention can be produced in such a manner that various additives such as the thermal stabilizer and the carboxyl group-capping agent are added, on an as-needed basis, to a PGA-based resin obtained by a conventionally known method, and then the mixture is melt kneaded.

A heating temperature during the melt kneading is preferably 230 to 280°C, and more preferably 240 to 270°C. If the heating temperature is lower than the lower limit, the effects of the addition of the various additives such as the thermal stabilizer and the carboxyl group-capping agent tend to be exhibited insufficiently. Meanwhile, if the heating temperature exceeds the upper limit, the obtained solid PGA-based resin composition tends to be colored.

A method for the melt kneading is not particularly limited, but examples thereof include methods using a stirrer, a continuous kneader, or an extruder, or the like. Among these methods, a method using an extruder (in particular, a twin-screw kneader-extruder) is preferable, from the viewpoint that a treatment can be conducted in a short period, and the process can smoothly proceed to the subsequent cooling step.

Moreover, from the viewpoint that a less-colored solid PGA-based resin composition can be obtained efficiently, the PGA-based resin composition in a molten state is preferably produced by a method described in International Publication No. WO2007/086563, that is, a method in which a partially polymerized product is synthesized by ring-opening polymerization of glycolide; a melt of the partially polymerized product is continuously introduced into a twin-screw mixer to obtain a partially polymerized product in a solid and crushed state; then the solid and crushed material of the partially polymerized product is subjected to solid-state polymerization; the thermal stabilizer is added to the resultant polymer; and then the mixture is melt kneaded.

In order to obtain a less-colored solid PGA-based resin composition in a case where the PGA-based resin is mixed with the thermal stabilizer and the carboxyl group-capping agent, it is preferable that the thermal stabilizer be added to the PGA-based resin, followed by melt blending, and then the carboxyl group-capping agent be added to the melt blended mixture, followed by melt blending.

Moreover, in order to suppress hydrolysis of the PGA-based resin in a cooling step to be described later, a glycolide content in the PGA-based resin composition in a molten state is preferably reduced to 0.6% by mass or less, and more preferably to 0.3% by mass or less, by a method described in International Publication No. WO2007/034805.

(Method for Producing Solid PGA-based Resin Composition)

The present invention is a method for obtaining a solid PGA-based resin composition by cooling the thus obtained PGA-based resin composition in a molten state with an aqueous medium. Specifically, in the method for producing a solid PGA-based resin composition of the present invention, the PGA-based resin composition in a molten state is cooled by being brought into contact with the aqueous medium (a cooling step) so that a sodium ion concentration in a finally obtained solid PGA-based resin composition can be less than 100 ppb by mass. Subsequently, if necessary, the obtained solid PGA-based resin composition is converted into a particulate form by use of a pelletizer, a crusher, or the like. Thus, a PGA-based resin composition in a particulate form such as a pellet form can be obtained.

By reducing the sodium ion concentration in the finally obtained solid PGA-based resin composition to less than 100 ppb by mass as described above, the coloration of the solid PGA-based resin composition due to heat can be suppressed. Moreover, from such a viewpoint, the sodium ion concentration in the finally obtained solid PGA-based resin composition is preferably 50 ppb by mass or less, more preferably 30 ppb by mass or less, particularly preferably 20 ppb by mass or less, and most preferably 10 ppb by mass or less.

Moreover, according to the present invention, the sodium ion concentration in the PGA-based resin composition can be reduced by bringing the PGA-based resin composition in a molten state into contact with the aqueous medium to thereby cool and solidify the PGA-based resin composition as described above. Alternatively, according to the present invention, even when the sodium ion concentration in the PGA-based resin composition is increased by absorption of sodium ion in the aqueous medium, the amount of the increase (i.e., a difference (Cs-Cm) between the sodium ion concentration (Cs) in the solid polyglycolic acid-based resin composition obtained in the cooling step and a sodium ion concentration (Cm) in the polyglycolic acid-based resin composition in a molten state) can be preferably 30 ppb by mass or less, more preferably 20 ppb by mass or less, and particularly preferably 10 ppb by mass or less. This makes it possible to suppress coloration of the obtained solid PGA-based resin composition due to heat.

Examples of a method for bringing the PGA-based resin composition in a molten state into contact with the aqueous medium include a method in which the PGA-based resin composition in a molten state is immersed in the aqueous medium; a method in which a mist of the aqueous medium is brought into contact with the PGA-based resin composition in a molten state by spraying the aqueous medium thereto by use of a spraying apparatus; a method in which a vapor of the aqueous medium is brought into contact with the PGA-based resin composition in a molten state; and the like. More specific methods include a method in which the PGA-based resin composition in a molten state discharged from an extruder is immersed in a bath filled with the aqueous medium; a method in which the aqueous medium is sprayed by use of a spraying apparatus to the PGA-based resin composition in a molten state, or a vapor of the aqueous medium is applied to the PGA-based resin composition in a molten state, while the PGA-based resin composition in a molten state discharged from an extruder is being transferred on a conveyor; and the like.

The aqueous medium used in the present invention is preferably ion-exchanged water. Examples of the ion-exchanged water include ion-exchanged water obtained by treating tap water, industrial water, or the like with a cation exchange resin such as a hydrogen ion-exchange resin or a sodium ion-exchange resin.

A sodium ion concentration in the ion-exchanged water is not particularly limited, but is preferably less than 30 ppm by mass, more preferably less than 20 ppm by mass, and particularly preferably less than 10 ppm by mass. An example of such ion-exchanged water having a low sodium ion concentration is ion-exchanged water obtained by treatment with a hydrogen ion-exchange resin. When the sodium ion concentration in the ion-exchanged water is within the above-mentioned range, a method for bringing the PGA-based resin composition in a molten state into contact with the ion-exchanged water is not particularly limited. On the other hand, if the sodium ion concentration is not less than the upper limit, the method for brining the PGA-based resin composition in a molten state into contact with the ion-exchanged water is limited to a contact method by which the water content in the obtained solid PGA-based resin composition can be less than 500 ppm by mass (preferably less than 250 ppm by mass). Examples of the contact method by which the water content can be reduced include a method in which a mist of the ion-exchanged water or a steam of the ion-exchanged water is brought into contact with the PGA-based resin composition in a molten state, and the like.

Moreover, in the present invention, a mist of ion-exchanged water having a sodium ion concentration in the above-mentioned range is particularly preferably brought into contact with the PGA-based resin composition in a molten state by use of a spraying apparatus or the like. This makes it possible to substantially prevent the increase in the sodium ion concentration in the PGA resin composition during the cooling step.

In the present invention, the temperature of the aqueous medium is not particularly limited, as long as the PGA-based resin composition in a molten state can be cooled. In general, the temperature is 5°C to 100°C. The temperature is preferably around room temperature from the viewpoints of economy and cooling efficiency. However, it is unnecessary to cool the aqueous medium for the purpose of suppressing the rise in temperature due to the contact with the PGA-based resin composition in a molten state. Particularly when the conversion into a particulate form such as pelletization is conducted after the cooling, the crystallization of the PGA-based resin composition is preferably advanced in the cooling step so that the conversion into a particulate form can proceed smoothly. For this reason, the temperature of the aqueous medium is preferably in a range of $\pm 30$°C from the glass transition temperature (Tg) of the PGA-based resin composition.

Moreover, the time for which the PGA-based resin composition in a molten state is in contact with the aqueous medium is not particularly limited, as long as the PGA-based resin composition in a molten state can be cooled sufficiently. However, from the viewpoint of reducing the amount of sodium ion absorbed by the PGA-based resin composition, the contact time is preferably as short as possible. For example, the contact time is preferably 1 to 20 seconds, and more preferably 2 to 15 seconds, in the case of contact by immersion. In the case of contact by spraying, the time depends on the amount of the aqueous medium sprayed per unit time. For example, when 200 g of the PGA-based resin composition in a molten state is cooled by the aqueous medium sprayed at a rate of 100 to 3000 g/minutes, the contact time is preferably 2 to 60 seconds, and more preferably 5 to 30 seconds.

[Examples]

Hereinafter, the present invention will be described more specifically on the basis of Examples and Comparative Example. However, the present invention is not limited to the following Examples. Note that, measurement of the sodium ion concentration and the water content, and a heat stability test were carried out by the following methods.

(Measurement of Sodium Ion Concentration)

Approximately 10 g of a sample was precisely weighted. The sample was subjected to a wet decomposition by adding 2.5 ml of concentrated sulfuric acid and 2 ml of hydrogen peroxide water to the sample. Then, ion-exchanged water was added to the mixture so as to measure up to a volume of 50 ml. The sodium ion concentration was determined by highfrequency inductively coupled plasma-atomic emission spectroscopy (ICP-AES).

(Measurement of Water Content)

One to two grams of a PGA resin composition in a pellet form was precisely weighted. The amount of water in the sample was measured by use of a Karl Fischer moisture titrator equipped with an evaporator at an evaporation temperature of 220°C, and the water content was calculated.

(Heat Stability Test)

On a dedicated Petri dish, 3 g of a PGA resin composition in a pellet form was spread, and measured for the yellow index (YI) by use of a spectral color-difference meter ("TC-1800" manufactured by Tokyo Denshoku Co., Ltd.) in a reflected light measuring method under conditions of standard light C, 2° visual field, and a color system. Next, the PGA resin composition in a pellet form was introduced into a mold which was sandwiched between aluminum plates and which had a diameter of 25 mm and a thickness of 3 mm, and heated on a heat press at 290°C for 1 min. Then, the PGA resin composition was held for 30 min at the above-mentioned temperature, with applying a pressure of 2 MPa thereto. Thereafter, the PGA resin composition was cooled to room temperature. Thus, a PGA resin formed article in a disk shape was obtained. The yellow index (YI) of the formed article was measured under the above-described conditions, and the amount of change in the yellow index before and after the heating was determined.

(Synthesis Example)

Into a sealable SUS container (capacity: 56 L) having a steam jacket structure and equipped with a stirrer, 22500 g of glycolide and 0.68 g (30 ppm by mass) of tin dichloride dihydrate were introduced. Then, 1.49 g of water was added to obtain a total proton concentration in the container of 0.13% by mole. Note that, the total protons in the container include protons in water (moisture) in the atmosphere inside the container. The amount of water added was determined in consideration of the amount of water (0.11 g) in the atmosphere inside the container. Subsequently, the container was sealed. While steam was circulated through the jacket with string, the mixture in the container was heated until the temperature of the mixture reached 100°C. Thus, the mixture was melted, and a uniform liquid mixture was obtained.
Next, a reactor comprising a main body having a jacket structure including a reaction tube (made of SUS 304) having an inner diameter of 24 mm and two metal plates (made of SUS 304) having jacket structures was prepared. One of the metal plates (hereinafter referred to as a "lower plate") was attached to a lower opening portion of the reaction tube. Then, the liquid mixture was transferred through an upper opening portion of the reaction tube, while the temperature of the liquid mixture was kept at 100°C. Immediately after the completion of the transfer, the reaction tube was sealed by attaching the other one of the metal plates (hereinafter referred to as an "upper plate") thereto. Thereafter, while a heating medium oil was being circulated at 170°C through the jackets of the main part and the two metal plates, the reactor was held for 7 hours. Thus, a polyglycolic acid resin (PGA resin) was synthesized.
Next, the reactor was cooled to around room temperature by cooling the heating medium oil circulating through the jackets. After that, the lower plate was detached, and then lumps of the PGA resin were taken out through the lower opening portion of the reaction tube. Note that, when a PGA resin is synthesized by this method, the yield thereof is approximately 100%. The obtained lumps of the PGA resin were crushed by a crusher. The sodium ion concentration in the obtained crushed material of the PGA resin was determined to be 10 ppb by mass. In addition, the weight average molecular weight (relative to polymethyl methacrylate) of the obtained PGA resin was determined to be 225000 by GPC measurement.

(Preparation Example 1)

Industrial water was passed through a column filled with a hydrogen ion-typed strongly acidic cation exchange resin having sulfonic acid groups to thereby exchange cations in the industrial water with hydrogen ion. Thus, ion-exchanged water A was obtained. The sodium ion concentration in the ion-exchanged water A was determined to be 0.012 ppm by mass.

(Preparation Example 2)

Ion-exchanged water B was obtained by exchanging cations in industrial water with sodium ion in the same manner as in Preparation Example 1, except that a sodium ion-typed strongly acidic cation exchange resin having sodium sulfonate groups was used instead of the hydrogen ion-typed strongly acidic cation exchange resin. The sodium ion concentration in the ion-exchanged water B was determined to be 39.1 ppm by mass.

(Example 1)

To 100 parts by mass of the crushed material of the PGA resin obtained in the Synthesis Example, 0.03 parts by mass of a thermal stabilizer ("Adeka Stab AX-71" manufactured by ADEKA CORPORATION; an approximately equimolar mixture of mono- and di-stearyl acid phosphates, sodium ion concentration: 200 ppb by mass) was added. The mixture was fed to a twin-screw kneader-extruder ("TEM-41SS" manufactured by Toshiba Machine Co., Ltd.) in which the temperatures of ten sections defined between a feeding unit and a discharging unit, and the temperature of a die were set to 200°C, 230°C, 260°C, 270°C, 270°C, 270°C, 270°C, 250°C, 240°C, 230°C, and 230°C, respectively, in this order from the feeding unit. Thus, the mixture was melt kneaded therein and extruded therefrom. A strand of the PGA resin composition in a molten state was discharged through the die of the extruder, having a single strand hole. Immediately thereafter, the discharged strand was transferred on a mesh conveyor at 10 m/min. At a place 20 cm away from the die, the ion-exchanged water A at a water temperature of approximately 20°C was sprayed to the strand from above by use of a spraying apparatus. The strand of the PGA resin composition in a molten state was cooled and solidified by bringing the ion-exchanged water A sprayed at 1,000 g/min and the strand into contact with each other for 10 seconds.

While being taken up at a constant speed, the obtained strand of the solid PGA resin composition was pelletized by use of a pelletizer equipped with a rotatable cutter. Table 1 shows the measured results of the water content and the sodium ion concentration of the obtained PGA resin composition in a pellet form and the result of the heat stability test thereof. Note that the water content and the sodium ion concentration of a PGA resin composition are not altered by the pelletization. Moreover, the concentration of sodium ion contained in the PGA resin composition in a molten state before the cooling was calculated from the sodium ion concentrations of the crushed material of the PGA resin and the thermal stabilizer, which were raw materials, and the mixed amounts thereof by use of the following formula:

$$\text{Na}^+ \text{ concentration in PGA resin composition in molten}$$
$$\text{state} = \{(\text{Na}^+ \text{ concentration in PGA resin}) \times (\text{amount of PGA}$$
$$\text{resin}) + (\text{Na}^+ \text{ concentration in thermal stabilizer}) \times (\text{amount}$$
$$\text{of thermal stabilizer})\}/\{(\text{amount of PGA resin}) + (\text{amount of}$$
$$\text{thermal stabilizer})\}.$$

Table 1 also shows the result.

(Example 2)

A PGA resin composition in a pellet form was obtained in the same manner as in Example 1, except that the strand of the PGA resin composition in a molten state was cooled by spraying the ion-exchanged water B instead of the ion-exchanged water A. Table 1 shows the measured results of the water content and the sodium ion concentration of the PGA resin composition in a pellet form, and the result of the heat stability test thereof. Table 1 also shows a calculated value of the concentration of sodium ion contained in the PGA resin composition in a molten state before the cooling.

(Example 3)

A PGA resin composition in a pellet form was obtained in the same manner as in Example 1, except that a crushed material of a PGA resin having a sodium ion concentration of 80 ppb by mass was used instead of the crushed material of the PGA resin having a sodium ion concentration of 10 ppb by mass. Table 1 shows the measured results of the water content and the sodium ion concentration of the PGA resin composition in a pellet form, and the result of the heat stability test thereof. Table 1 also shows a calculated value of the concentration of sodium ion contained in the PGA resin composition in a molten state before the cooling.

(Example 4)

A PGA resin composition in a pellet form was obtained in the same manner as in Example 2, except that a crushed material of a PGA resin having a sodium ion concentration of 80 ppb by mass was used instead of the crushed material of the PGA resin having a sodium ion concentration of 10 ppb by mass. Table 1 shows the measured results of the water content and the sodium ion concentration of the PGA resin composition in a pellet form, and the result of the heat stability test thereof. Table 1 also shows a calculated value of the concentration of sodium ion contained in the PGA resin composition in a molten state before the cooling.

(Example 5)

Melt kneading and extrusion were conducted in the same manner as in Example 1 by use of the twin-screw kneader-extruder, and a strand of the PGA resin composition in a molten state was discharged through the die of the extruder, having a single strand hole. The discharged strand was introduced to a water bath filled with the ion-exchanged water A at approximately 40°C, and was immersed therein for 10 seconds. Thus, the strand of the PGA resin composition in a molten state was cooled and solidified.

The obtained strand of the solid PGA resin composition was taken out from the water bath, and pelletized in the same manner as in Example 1, by use of the pelletizer equipped with a rotatable cutter. Table 1 shows the measured results of the water content and the sodium ion concentration of the obtained PGA resin composition in a pellet form, and the result of the heat stability test thereof. Table 1 also shows a calculated value of the concentration of sodium ion contained in the PGA resin composition in a molten state before the cooling.

(Comparative Example 1)

A PGA resin composition in a pellet form was obtained in the same manner as in Example 5, except that the strand of the PGA resin composition in a molten state was cooled by use of a water bath filled with the ion-exchanged water B at approximately 40°C instead of the ion-exchanged water A. Table 1 shows the measured results of the water content and the sodium ion concentration of the PGA resin composition in a pellet form, and the result of the heat stability test thereof. Table 1 also shows a calculated value of the concentration of sodium ion contained in the PGA resin composition in a molten state before the cooling.

[Table 1]

| | Ex. 1 | Ex. 2 | Ex. 3 | Ex. 4 | Ex. 5 | Comp.Ex.1 |
|---|---|---|---|---|---|---|
| $Na^+$ concentration in PGA resin (ppb by mass) | 10 | | 80 | | 10 | |
| $Na^+$ concentration in thermal stabilizer (ppb by mass) | 200 | | 200 | | 200 | |
| Calculated value Cm of $Na^+$ concentration in PGA resin composition before cooling (ppb by mass) | 10.1 | | 80.0 | | 10.1 | |
| Type of ion-exchanged water | A | B | A | B | A | B |
| $Na^+$ concentration in ion-exchanged water (ppb by mass) | 0.012 | 39.1 | 0.012 | 39.1 | 0.012 | 39.1 |
| Cooling method | Spray | | | | Immersion | |
| Water content in pellets (ppm by mass) | 200 | | 180 | 190 | 6500 | |
| $Na^+$ concentration Cs in pellets (ppb by mass) | 0 | 7.82 | 79.6 | 84.8 | 0.08 | 254 |
| Yellow index [YI] after heat treatment | 19.2 | 20.2 | 19.4 | 19.7 | 19.6 | 24.4 |
| Amount of change in yellow index [YI] | 0.5 | 1.5 | 0.7 | 1.0 | 0.9 | 5.7 |

As is apparent from the results shown in Table 1, in the cases (Examples 1 to 4) where the strand was cooled by spraying the ion-exchanged water thereto and the case (Example 5) where the strand was cooled by being immersed in the ion-exchanged water having a low sodium ion concentration, according to the present invention, the sodium ion concentration of the PGA resin composition in a pellet form was lower, and the change in the yellow index before and after the heating was smaller, than in the case (Comparative Example 1) where the strand was immersed in the ion-exchanged water having a high sodium ion concentration. Specifically, it was found that the solid PGA resin compositions obtained in Examples 1 to 5 were excellent in heat stability.

Note that, in Example 4 and Comparative Example 1, the sodium ion concentration of the PGA resin composition was increased by the cooling. This increase occurred presumably because of the following reason. Specifically, since there were no chances of contamination of the PGA resin composition with sodium in the steps from the start of the kneeing to the discharge of the strand, sodium ion was absorbed during the cooling by the ion-exchanged water. In addition, since the temperature in the melt kneading and extrusion step was 200 to 270°C, the water content in the pellets presumably corresponded to the amount of water absorbed during the cooling by the ion-exchanged water.

[Industrial Applicability]

As described above, according to the present invention, extreme increase in sodium ion concentration is suppressed in the cooling step in producing a solid PGA resin composition, which makes it possible to obtain a solid PGA resin composition having a low sodium ion concentration, and hence to suppress coloration of the solid PGA resin composition due to heat.

Accordingly, a particulate PGA resin composition obtained by the present invention is excellent in heat stability. Hence, the particulate PGA resin composition is useful as a raw material for formed articles produced by a forming method comprising heating, such as extrusion molding or injection molding, and the like.

**Claims**

1. A method for producing a solid polyglycolic acid-based resin composition, comprising:

   a cooling step of cooling a polyglycolic acid-based resin composition in a molten state by an aqueous medium, wherein
   in the cooling step, the polyglycolic acid-based resin composition in the molten state is cooled by being brought into contact with the aqueous medium so that a sodium ion concentration in an obtained solid polyglycolic acid-based resin composition is less than 100 ppb by mass.

2. The method for producing a solid polyglycolic acid-based resin composition according to claim 1, wherein a difference (Cs-Cm) between the sodium ion concentration (Cs) in the solid polyglycolic acid-based resin composition obtained in the cooling step and a sodium ion concentration (Cm) in the polyglycolic acid-based resin composition in the molten state is 30 ppb by mass or less.

3. The method for producing a solid polyglycolic acid-based resin composition according to claim 1 or 2, wherein the aqueous medium is ion-exchanged water.

4. The method for producing a solid polyglycolic acid-based resin composition according to claim 3, wherein a sodium ion concentration in the ion-exchanged water is less than 30 ppm by mass.

5. The method for producing a solid polyglycolic acid-based resin composition according to claim 4, wherein the ion-exchanged water is obtained by treatment with a hydrogen ion-exchange resin.

6. The method for producing a solid polyglycolic acid-based resin composition according to any one of claims 3 to 5, wherein
   in the cooling step, the polyglycolic acid-based resin composition in the molten state is cooled by being brought into contact with the ion-exchanged water so that a water content in the obtained solid polyglycolic acid-based resin composition is less than 500 ppm by mass.

7. The method for producing a solid polyglycolic acid-based resin composition according to claim 6, wherein
   in the cooling step, the polyglycolic acid-based resin composition in the molten state is cooled by being brought into contact with a mist of the ion-exchanged water.

8. A method for producing a particulate polyglycolic acid-based resin composition, comprising converting a solid polyglycolic acid-based resin composition obtained by the production method according to any one of claims 1 to 7 into a particulate form.

## INTERNATIONAL SEARCH REPORT

| International application No. |
| --- |
| PCT/JP2010/055751 |

A. CLASSIFICATION OF SUBJECT MATTER
*C08L67/04*(2006.01)i, *C08J3/20*(2006.01)i, *C08L101/16*(2006.01)n

According to International Patent Classification (IPC) or to both national classification and IPC

B. FIELDS SEARCHED

Minimum documentation searched (classification system followed by classification symbols)
C08L67/04, C08J3/20, C08L101/16

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | WO 2007/034805 A1 (Kureha Corp.), 29 March 2007 (29.03.2007), & US 2009/0118462 A1 & EP 1970399 A1 & CN 101268123 A | 1-8 |
| A | JP 2001-214043 A (Toyobo Co., Ltd.), 07 August 2001 (07.08.2001), (Family: none) | 1-8 |
| A | JP 2002-080606 A (Kuraray Co., Ltd.), 19 March 2002 (19.03.2002), (Family: none) | 1-8 |

☐ Further documents are listed in the continuation of Box C.      ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 22 April, 2010 (22.04.10) | 11 May, 2010 (11.05.10) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007034805 A
- WO 2004087813 A
- JP 2001261797 A
- WO 2007086563 A